# EUROPEAN PATENT APPLICATION

(11) **EP 4 203 389 A1**
(43) Date of publication of application: **28.06.2023**
(21) Application number: 21217472.6
(22) Date of filing: 23.12.2021
(51) Int. Cl.: H04L 9/40, H04L 9/00, G06F 21/56

(54) **SYSTEM AND METHOD FOR DECENTRALIZED AUDITING OF A BLOCKCHAIN NETWORK**

(71) Applicant: Siemens Aktiengesellschaft, 80333 München (DE)
(72) Inventor: RAJ, Arun, 635110 Hosur, Tamil Nadu (IN); SINGH, Saurabh Narayan, 81739 München (DE)
(74) Representative: Horn Kleimann Waitzhofer Patentanwälte PartG mbB

(57) **Abstract**

A system (100) and method (200) for decentralized auditing of blockchain network (102). The method (200) includes designating set of first nodes (102a-102g) in blockchain network (102) as custodian nodes (302). The method (200) includes receiving, by custodian nodes (302), configuration file (402) comprising parameters for executing smart contract, with information about set of second nodes (102b-102d), designated as application nodes (304), and set of third nodes (102c-102d), designated as recipient nodes (306). The method (200) includes emulating, by custodian nodes (302), execution of smart contract to determine identities of possible recipient nodes (306); monitoring, by custodian nodes (302), execution of smart contract to access information about identities of recipient nodes (306); and generating, by custodian nodes (302), notification (404), if there is mismatch between the identities of possible recipient nodes (306) and the identities of recipient nodes (306) from the accessed information.

## Description

The present disclosure generally relates to blockchain technology, and more particularly to auditing of a blockchain network.

Blockchains are decentralized ledgers or databases, which typically include multiples entities, with each entity acting as one of the nodes in the blockchain. Blockchains are being increasingly accepted and utilized by various enterprises for different purposes, such as for secure sharing of the data. As the data is shared between different nodes, the blockchain need to ensure that the data is shared with confidentiality. The blockchain further need to ensure that the data is shared only with designated nodes in the network, as defined. However, the blockchain framework may not be fully trusted for adhering to the privacy and confidentiality.

In order to confirm that the blockchain is operating as expected, and that the confidentiality has been maintained and the data sharing is between the designated nodes, a verification process may be required. However, the verification process may be a challenge. For instance, different types of blockchains process and handle the data in a different manner, thus, it is a challenge to ensure and verify that the data is essentially processed confidentially. A manual audit may be taken as the verification process. However, the manual audit is a time-extensive and a resource-extensive process, and requires a deep understanding of the blockchain architecture (underlying code) which may not always be available. Moreover, the verification process via the manual audit may not always be transparent. Furthermore, even in case of detection of fault in data sharing architecture of a given operational blockchain, any breach in confidentiality is difficult to revoke as the data may already be shared with unwanted nodes other than the designated nodes of the blockchain.

In light of the above, it is an object of the present disclosure to provide a reliable system and method for decentralized auditing of a blockchain network.

The object of the present disclosure is achieved by a method for decentralized auditing of a blockchain network. The method includes designating a set of first nodes in the blockchain network as custodian nodes, with the custodian nodes having access to information about identities of nodes among which data is shared as a result of execution of a smart contract in the blockchain network. The method further includes receiving, by the custodian nodes, a configuration file comprising one or more parameters for executing a given smart contract in the blockchain network. The configuration file defines information about a set of second nodes, designated as application nodes, assigned to execute the given smart contract, and a set of third nodes, designated as recipient nodes and being a sub-set of the application nodes, assigned to have access to data shared as a result of execution of the given smart contract. The method further includes emulating, by the custodian nodes, execution of the given smart contract to determine identities of possible recipient nodes therefor. Further, the method includes monitoring, by the custodian nodes, execution of the given smart contract in the blockchain network to access information about identities of the recipient nodes therein. Furthermore, the method includes generating, by the custodian nodes, a notification indicative of potential breach of at least one of the one or more parameters for executing the given smart contract in the blockchain network, if there is a mismatch between the determined identities of possible recipient nodes and the identities of the recipient nodes from the accessed information thereabout. The conventional methods of verification require manual audit, whereas the method of the present disclosure enables automatic decentralized audit across all nodes of the blockchain network, based on the smart contract.

In one or more embodiments, at least one of the application nodes is part of the custodian nodes in the blockchain network, at least for the decentralized auditing of the blockchain network during execution of the given smart contract assigned to be executed thereby. The at least one application nodes as part of the custodian nodes ensures trust and reliability of the performed decentralized auditing of the blockchain network.

In one or more embodiments, the configuration file for the given smart contract is received by the custodian nodes from the said at least one of the application nodes as part of the custodian nodes.

In one or more embodiments, the emulation of the execution of the given smart contract is performed at the said at least one of the application nodes as part of the custodian nodes.

In one or more embodiments, the generated notification is notified, by the custodian nodes, to at least one of the determined possible recipient nodes. The notification received by the possible recipient nodes enables the possible recipient nodes to identify specific nodes at which potential breach is detected.

In one or more embodiments, the custodian nodes are selected from a set of trusted nodes in the blockchain network. The selection of the custodian nodes from the set of trusted nodes ensures reliability of the decentralized auditing of the blockchain network.

In one or more embodiments, the method further comprises randomly or pseudo-randomly selecting one or more smart contracts of a plurality of smart contracts being executed in the blockchain network to determine corresponding potential breach of at least one of the one or more parameters thereof, in the blockchain network. The random selection of the one or more smart contracts instead of each of the plurality of smart contracts to determine the potential breach reduces an amount of processing in the blockchain network and thus, helps in saving of memory and computation time.

The object of the present disclosure is further achieved by a system for decentralized auditing of a blockchain network, the system includes one or more processing units and a memory communicatively coupled to the one or more processing units. The memory comprises a module stored in the form of machine-readable instructions executable by the one or more processing units, wherein the module is configured to perform the method steps described above.

The object of the present disclosure is further achieved by a computer-program product, having computer-readable instructions stored therein, that when executed by a processing unit, cause the processing unit to perform the method steps described above.

The object of the present disclosure is further achieved by a computer readable medium on which program code sections of a computer program are saved, the program code sections being loadable into and/or executable in a system to make the system execute the method steps described above when the program code sections are executed in the system.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

As used herein, the term "blockchain network" may refer to a decentralized network that includes the plurality of nodes. In an example, the blockchain network is a consortium blockchain network. Such plurality of nodes may, for example, perform transactions in the blockchain network.

As used herein, the term "computing device" may refer to be a physical, a virtual device or a computer-program product. In many implementations, the computing device may be any device capable of performing operations, such as a dedicated processor, a portion of a processor, a virtual processor, a portion of a virtual processor, portion of a virtual device, or a virtual device. The system of the present disclosure may include or be embodied in the computing device. In some implementations, the computing device may execute an application for decentralized auditing of the blockchain network.

As used herein, the term "ledger" may refer to utilized by the blockchain network to store the performed transactions. An access to information of the transaction in the ledger is provided to designated nodes of the blockchain network that are a part of the transaction.

As used herein, the term "network" may be utilized for communication of the blockchain network, the computing device and the ledger. In other words, the blockchain network, the computing device and the ledger are communicatively coupled via the network.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention:
- FIG 1: is a schematic diagram representation of a system implemented for decentralized auditing of a blockchain network, in accordance with an embodiment of the present disclosure;
- FIG 2: is a flowchart representation of a method listing steps involved in a decentralized auditing of the blockchain network, in accordance with an embodiment of the present disclosure;
- FIG 3: is a schematic diagram representation of implementation of the present system to depict process for designation of nodes in the blockchain network for decentralized auditing thereof, in accordance with an embodiment of the present disclosure; and
- FIG 4: is a schematic diagram representation of implementation of the present system to depict process for generating notification indicative of potential breach in the blockchain network in decentralized auditing thereof, in accordance with an embodiment of the present disclosure.

Examples of a method, a system, a computer-program product and a computer readable medium decentralized auditing of a blockchain network are disclosed herein. Various embodiments are described with reference to the drawings, wherein like reference numerals are used to refer to like elements throughout. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Unless specified otherwise in the following description, the terms "perform", "calculate", "computer-assisted", "compute", "establish", "generate", "configure", "reconstruct", and the like preferably relate to operations and/or processes and/or processing steps that change and/or generate data and/or convert the data into other data, wherein the data may be represented or be present in particular in the form of physical variables, for example in the form of electrical impulses. The expression "computer" should in particular be interpreted as broadly as possible in order in particular to cover all electronic devices having data processing properties. Computers may thus for example be personal computers, servers, programmable logic controllers (PLCs), hand-held computer systems, pocket PC devices, mobile radio devices and other communication devices able to process data in a computer-assisted manner, processors and other electronic data processing devices.

Moreover, in particular a (relevant) person skilled in the art, with knowledge of the method claim/method claims, is of course aware of all routine possibilities for realizing products or possibilities for implementation in the prior art, and so there is no need in particular for independent disclosure in the description. In particular, these customary realization variants known to the person skilled in the art can be realized exclusively by hardware (components) or exclusively by software (components). Alternatively and/or additionally, the person skilled in the art, within the scope of his/her expert ability, can choose to the greatest possible extent arbitrary combinations according to embodiments of the invention for hardware (components) and software (components) in order to implement realization variants according to embodiments of the invention.

A combination according to embodiments of the invention for hardware (components) and software (components) can occur in particular if one portion of the effects according to embodiments of the invention is brought about exclusively by special hardware (e.g., a processor in the form of an ASIC or FPGA) and/or another portion by the (processor- and/or memory-aided) software.

In particular, in view of the high number of different realization possibilities, it is impossible and also not helpful or necessary for the understanding of embodiments of the invention to name all these realization possibilities. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can also serve as features for another exemplary embodiment, in particular without this having to be explicitly stated in the respective exemplary embodiment.

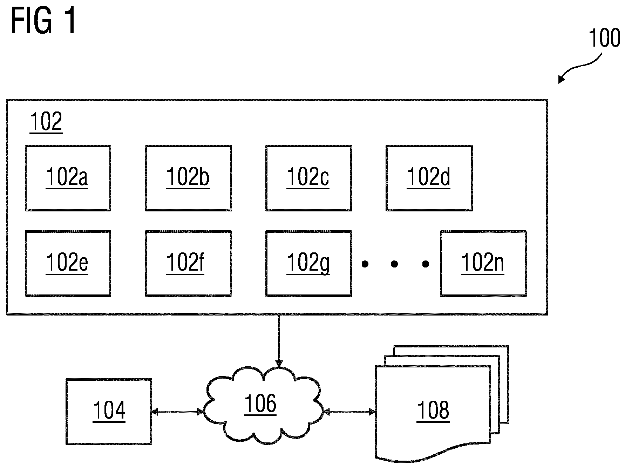

FIG 1 shows an exemplary embodiment of the present disclosure as a schematic diagram of a system 100 implemented for decentralized auditing of a blockchain network 102. In present implementation, the system 100 may reside on or may be executed by one or multiple computing devices 104, which may be connected to a network (e.g., the internet or a local area network), such as a network 106. The system 100 further includes a ledger 108 (such as a database). The blockchain network 102, the computing devices 104 and the ledger 108 are communicatively coupled via the network 106. Examples of computing devices 104 may include, but are not limited to, a personal computer(s), a laptop computer(s), mobile computing device(s), a server computer, a series of server computers, a mainframe computer(s), or a computing cloud(s). In general, the "computing device" in connection with embodiments of the present may be understood to mean for example a computer (system), a client, a smartphone, a device or a server that are in each case arranged outside the blockchain or are not participants in the distributed database (for example the blockchain) (that is to say do not perform operations with the distributed database or only query it without however performing transactions, inserting data blocks or calculating proof of work). As an alternative, the computing device may also in particular be understood to mean a node of the distributed database (as explained later in the description).

In certain implementations, the computing device 104 may be a physical or virtual device. In many implementations, the computing device 104 may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic.

In an example, the computing device 104 may be a computer-program product programmed for performing the said purpose. In another example, the computing device 104 may be a computer readable medium on which program code sections of a computer program are saved, the program code sections being loadable into and/or executable in a system to make the system execute the steps for performing the said purpose. The computing device 104 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device 104 can be implemented in a single chip. The system of the present disclosure as discussed in the preceding paragraphs may include or be embodied in the computing device 104. It may be appreciated that the two systems and (and the corresponding components/elements) may be equivalent for the purposes of the present disclosure.

In one embodiment, the computing device 104 includes a communication mechanism such as a bus for passing information among the components of the computing device 104. The computing device 104 includes one or more processing units and a memory unit. Generally, the memory unit is communicatively coupled to the one or more processing units. Hereinafter, the one or more processing units are simply referred to as processor and the memory unit is simply referred to as memory. Herein, in particular, the processor has connectivity to the bus to execute instructions and process information stored in the memory. The processor may include one or more processing cores with each core configured to perform independently. A multi-core processor enables multiprocessing within a single physical package. Examples of a multi-core processor include two, four, eight, or greater numbers of processing cores. Alternatively, or in addition, the processor may include one or more microprocessors configured in tandem via the bus to enable independent execution of instructions, pipelining, and multithreading. The processor may also be accompanied with one or more specialized components to perform certain processing functions and tasks such as one or more digital signal processors (DSP), or one or more application-specific integrated circuits (ASIC). A DSP typically is configured to process real-world signals (e.g., sound) in real time independently of the processor. Similarly, an ASIC can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

As used herein, the term "processor" refers to a computational element that is operable to respond to and processes instructions that drive the system. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system.

The processor and accompanying components have connectivity to the memory via the bus. The memory includes both dynamic memory (e.g., RAM, magnetic disk, writable optical disk, etc.) and static memory (e.g., ROM, CD-ROM, etc.) for storing executable instructions that when executed perform the method steps described herein for decentralized auditing of the blockchain network. In particular, the memory includes a module arrangement (or a module) to perform steps for decentralized auditing of the blockchain network. The memory also stores the data associated with or generated by the execution of the inventive steps.

Herein, the memory may be volatile memory and/or non-volatile memory. The memory may be coupled for communication with the processing unit. The processing unit may execute instructions and/or code stored in the memory. A variety of computer-readable storage media may be stored in and accessed from the memory. The memory may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In some implementations, the instruction sets and subroutines of the system 100, which may be stored on storage device, such as storage device coupled to computer, may be executed by one or more processors and one or more memory architectures included within computer. In some implementations, one or more of storage devices may include but are not limited to: hard disk drives; flash drives, tape drives; optical drives; RAID arrays; random access memories (RAM); and read-only memories (ROM). Examples of user devices (and/or computer) may include, but are not limited to, a personal computer, a laptop computer, a smart/data-enabled, cellular phone, a notebook computer, a tablet, a server, a television, a smart television, a media capturing device, and a dedicated network device.

In some implementations, the computing device 104 may include a data store, such as a database (e.g., relational database, object-oriented database, triplestore database, etc.) and may be located within any suitable memory location, such as storage device coupled to computer. In some implementations, data, metadata, information, etc. described throughout the present disclosure may be stored in the data store. In some implementations, computer may utilize any known database management system such as, but not limited to, DB2, in order to provide multi-user access to one or more databases, such as the above noted relational database. In some implementations, the data store may also be a custom database, such as, for example, a flat file database or an XML database. In some implementations, any other form(s) of a data storage structure and/or organization may also be used. In some implementations, the system 100 may be a component of the data store, a standalone application that interfaces with the above noted data store and/or an applet / application that is accessed via client applications. In some implementations, the above noted data store may be, in whole or in part, distributed in a cloud computing topology. In this way, computer and storage device may refer to multiple devices, which may also be distributed throughout the network 106.

In some implementations, the computing device 104 may execute an application for decentralized auditing of the blockchain network, as described later in the description. In some implementations, the system 100 and/or application may be accessed via one or more of client applications. In some implementations, the system 100 may be a standalone application, or may be an applet / application / script / extension that may interact with and/or be executed within application a component of application and/or one or more of client applications. In some implementations, application may be a standalone application, or may be an applet / application / script / extension that may interact with and/or be executed within the system 100, a component of the system 100, and/or one or more of client applications. In some implementations, one or more of client applications may be a standalone application, or may be an applet / application / script / extension that may interact with and/or be executed within and/or be a component of the system 100 and/or application. Examples of client applications may include, but are not limited to, a standard and/or mobile web browser, an email application (e.g., an email client application), a textual and/or a graphical user interface, a customized web browser, a plugin, an Application Programming Interface (API), or a custom application. The instruction sets and subroutines of client applications which may be stored on storage devices coupled to user devices may be executed by one or more processors and one or more memory architectures incorporated into user devices.

In some implementations, one or more of client applications may be configured to effectuate some or all of the functionality of the system 100 (and vice versa). Accordingly, in some implementations, the system 100 may be a purely server-side application, a purely client-side application, or a hybrid server-side / client-side application that is cooperatively executed by one or more of client applications and/or the system 100.

In some implementations, one or more of client applications may be configured to effectuate some or all of the functionality of application (and vice versa). Accordingly, in some implementations, application may be a purely server-side application, a purely client-side application, or a hybrid server-side / client-side application that is cooperatively executed by one or more of client applications and/or application. As one or more of client applications the system 100, and application taken singly or in any combination, may effectuate some or all of the same functionality, any description of effectuating such functionality via one or more of client applications the system 100, application or combination thereof, and any described interaction(s) between one or more of client applications the system 100, application or combination thereof to effectuate such functionality, should be taken as an example only and not to limit the scope of the disclosure.

In some implementations, one or more of users may access the system 100 (e.g., using one or more of user devices) directly through the network 106. In some implementations, the network 106 may be connected to one or more secondary networks, examples of which may include but are not limited to: a local area network; a wide area network; or an intranet, for example. In some implementations, the computing device 104 may be connected to the network 106 through secondary network with phantom link line.

In some implementations, the various user devices may be directly or indirectly coupled to the network 106. For example, user device may be directly coupled to the network 106 via a hardwired network connection. Alternatively, user device may be wirelessly coupled to the network 106 via wireless communication channel established between user device and wireless access point (i.e., WAP) which in turn may be directly coupled to the network 106. WAP may be, for example, an IEEE 802.11a, 802.11b, 802.11g, 802.11ac, 802.11ae, Wi-Fi^{®}, RFID, and/or Bluetooth^{™} (including Bluetooth^{™} Low Energy) device that is capable of establishing wireless communication channel between user device and WAP. In other examples, user device may be wirelessly coupled to the network 106 via wireless communication channel established between user device and cellular network / bridge which may be directly coupled to the network 106. User devices may execute an operating system, examples of which may include but are not limited to, Android^{®}, Apple^{®} iOS^{®}, Mac^{®} OS X^{®}; Red Hat^{®} Linux^{®}, or a custom operating system.

In some implementations, some or all of the IEEE 802.11x specifications may use Ethernet protocol and carrier sense multiple access with collision avoidance (i.e., CSMA/CA) for path sharing. The various 802.11x specifications may use phase-shift keying (i.e., PSK) modulation or complementary code keying (i.e., CCK) modulation, for example, Bluetooth^{™} (including Bluetooth^{™} Low Energy) is a telecommunications industry specification that allows, e.g., mobile phones, computers, smart phones, and other electronic devices to be interconnected using a short-range wireless connection. Other forms of interconnection (e.g., Near Field Communication (NFC)) may also be used.

It is to be understood that the system and computer-assisted method described herein may be implemented in various forms of hardware, software, firmware, special purpose processors, or a combination thereof. "Computer-assisted" in connection with embodiments of the present disclosure may be understood to mean for example an implementation of the method in which in particular a processor executes at least one method step of the method. One or more of the present embodiments may take a form of a computer program product comprising program modules accessible from computer-usable or computer-readable medium storing program code for use by or in connection with one or more computers, processors, or instruction execution system. A "module" in connection with embodiments of the invention may be understood to mean for example a processor and/or a storage unit for storing program commands. By way of example, the processor is specifically configured so as to execute the program commands such that the processor executes functions in order to implement or perform the method according to embodiments of the invention or a step of the method according to embodiments of the invention. For the purpose of this description, a computer-usable or computer-readable medium can be any apparatus that can contain, store, communicate, propagate, or transport the program for use by or in connection with the instruction execution system, apparatus, or device.

As illustrated in FIG 1, the system 100 includes the blockchain network 102. The blockchain network 102 includes a plurality of nodes, such as nodes 102a, 102b, ..., 102n. The blockchain network 102 is a decentralized network that includes the plurality of nodes. In an example, the blockchain network 102 is a consortium blockchain network 102. Within the context of embodiments of the present disclosure, a "blockchain node", "node", "node of a blockchain" and the like can be understood to mean for example devices (e.g., field devices), computers, clients or subscribers that perform operations with a blockchain, such as the blockchain network 102. Such nodes may, for example, perform transactions of a blockchain or the links thereof or can insert or concatenate new links with new transactions into the blockchain network 102 by means of new links.

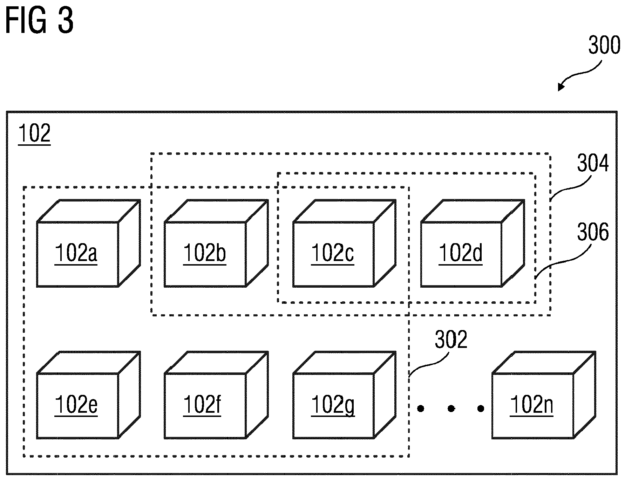

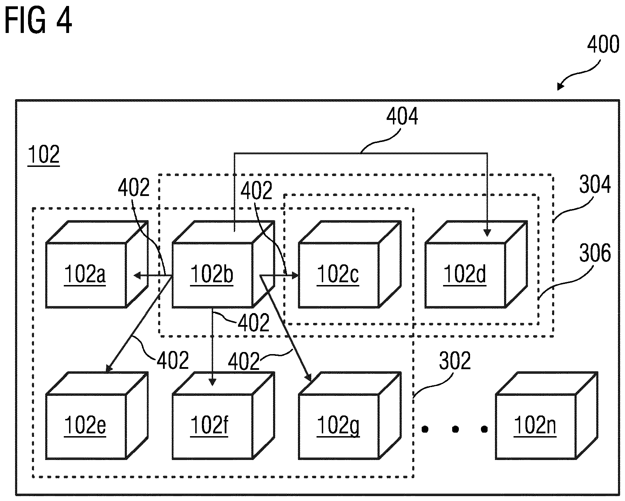

In the implementation of the present disclosure, the nodes 102a, 102b, ..., 102n of the blockchain network 102 are designated as different types of nodes. A first set of nodes of the nodes 102a, 102b, ..., 102n of the blockchain network 102 are designated as custodian nodes. Further, a set of second nodes are designated as application nodes. Furthermore, a set of third nodes are designated as recipient nodes. Details of the designation of the different types of nodes are explained in detail in the proceeding paragraphs, specifically in reference to FIGS 3 and 4.

The transactions are stored on a ledger or a database associated with the blockchain network 102, such as the ledger 108. Generally, the access to information of a transaction in the ledger 108 is provided to designated nodes (a sub-set of nodes 102a, 102b, ..., 102n) that are a part of the transaction, i.e., the nodes between which a smart contract has been executed. Within the context of embodiments of the present disclosure, the "smart contract" can be understood to mean for example an executable program code. The program code is in particular executable on a virtual machine. In particular, the term "smart contract" may refer to computer protocols and code that facilitate, verify, or enforce the negotiation or performance of a contract, or that obviate the need for a contractual clause. Smart contracts typically utilize a user interface and often emulate the logic of a contractual clause. Smart contracts can be embedded on a network block chain, like Ethereum, and may be selectively executed by the nodes of the same network.

As described herein, the module in the memory of the computing device 104 is configured to perform the operations of a method for decentralized auditing of the blockchain network 102. The computing device 104 performs the operations of the method by use of the network 106. Further, the transactions between the one or more nodes of the blockchain network 102 are stored in the ledger 108 via the network 106. Details of the method for decentralized auditing of the blockchain network 102 are explained in detail hereinafter.

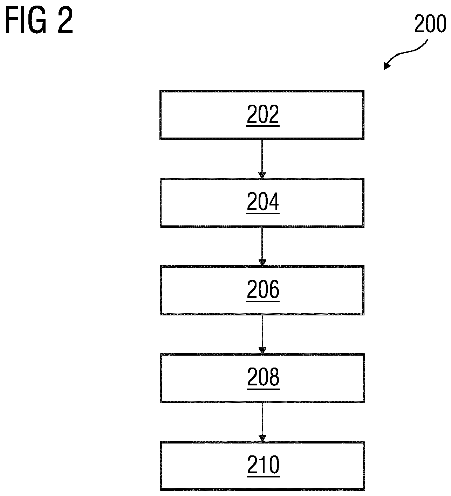

FIG 2 is a flowchart representation of a method 200 listing steps involved in a decentralized auditing of the blockchain network 102, in accordance with an embodiment of the present disclosure. Hereinafter, the method 200 of FIG 2 is explained in conjunction with elements of FIG 1, and further in reference to FIGS 3 and 4. Herein, FIG 3 is a schematic diagram representation of implementation of the present system to depict process for designation of nodes in the blockchain network for decentralized auditing thereof, in accordance with an embodiment of the present disclosure. FIG 4 is a schematic diagram representation of implementation of the present system to depict process for generating notification indicative of potential breach in the blockchain network in decentralized auditing thereof, in accordance with an embodiment of the present disclosure.

At step 202, the method 200 includes designating a set of first nodes in the blockchain network 102 as custodian nodes, with the custodian nodes having access to information about identities of nodes among which data is shared as a result of execution of the smart contract in the blockchain network 102. Herein, the set of first nodes are a subset of the nodes 102a, 102b, ..., 102n of the blockchain network 102.

With reference to FIG 3, there is shown the blockchain network 102 that includes the nodes 102a, 102b, ..., 102n. Further, as shown, a subset of the nodes 102a, 102b, ..., 102n are designated as custodian nodes 302. In accordance with an embodiment, the custodian nodes 302 are selected from a set of trusted nodes in the blockchain network 102. A trusted node is for example a node that has additional security measures (e.g., firewalls, access restrictions pertaining to the node or the like) in order to prevent manipulation thereof. Alternatively, or additionally, herein, the trusted node may be associated with the entity (like enterprise) that is a part of the blockchain network 102. In some implementations, the custodian nodes 302 have access to the entire blockchain network 102. In some implementations, the custodian nodes 302 may emulate node identities to run transactions on the blockchain network 102.

At step 204, the method 200 includes receiving, by the custodian nodes 302, a configuration file comprising one or more parameters for executing a given smart contract in the blockchain network 102, the configuration file defining information about a set of second nodes, designated as application nodes, assigned to execute the given smart contract, and a set of third nodes, designated as recipient nodes and being a subset of the application nodes, assigned to have access to data shared as a result of execution of the given smart contract. As used herein, the configuration file includes information about the transactions executed at the application nodes and an exemplary data that is a part of the said transaction.

The configuration file further includes information about the identity of the set of third nodes designated as recipient nodes (i.e., the nodes assigned to have access to data shared as the result of execution of the given smart contract). Further, the configuration file includes information about the identity of the application nodes that are assigned to execute the given smart contract.

Again, with reference to FIG 3, as shown, a set of second nodes are designated as application nodes 304. In the illustrated example, the nodes 102b, 102c and 102d of the nodes 102a, 102b, ..., 102n in the blockchain network 102 are designated as the application nodes 304. The application nodes 304 are assigned to execute the given smart contract as per the information related thereto, defined in the given smart contract. It may be appreciated that for each transaction or each execution of different smart contracts, the application nodes 304 may be a same set or a different set of second nodes, from the nodes 102a, 102b, ..., 102n in the blockchain network 102, depending on the information in the given smart contract to be executed, without any limitations.

In accordance with an embodiment, at least one of the application nodes 304 is part of the custodian nodes in the blockchain network 102, at least for the decentralized auditing of the blockchain network 102 during execution of the given smart contract assigned to be executed thereby. In such a case, the at least one application node 304 acts as a gatekeeper node which allows the verification of the deployed confidential application/smart contract. As the application nodes 304 are assigned to execute the given smart contract, at least one of the application nodes 304 being the custodian node is beneficial in a transparent decentralized auditing of the blockchain network 102. As discussed, in the illustrated example, the nodes 102b, 102c and 102d may be the application nodes 304; and herein out of the nodes 102b, 102c and 102d, the nodes 102b and 102c are a part of the designated custodian nodes 302.

In accordance with an embodiment, the configuration file for the given smart contract is received by the custodian nodes 302 from the said at least one of the application nodes 304 as part of the custodian nodes 302. The custodian nodes 302 do not have access to private data sets or private channels of the different application nodes 304. The received configuration file from the application node 304 pertains to one specific application. Further, the information about the identities of the nodes to execute the smart contract are obtained from the said at least one of the application nodes 302. Referring to FIG 4, as depicted, for example, the application node 102b transmits a configuration file 402 to the custodian node 102a, the custodian node 102c, the custodian node 102e, the custodian node 102f and the custodian node 102g.

Furthermore, a set of third nodes are designated as recipient nodes 306. In the present implementations, the recipient nodes 306 are a subset of the application nodes 304. In the illustrated example, out of the nodes 102b, 102c and 102d designated as the application nodes 304, the nodes 102c and 102d have been designated as the recipient nodes 306. Herein, the recipient nodes 306 are nodes which are assigned to receive the output of the execution of the smart contract between the application nodes 304. In other words, the recipient nodes 306 are assigned to have access to data shared as the result of execution of the given smart contract.

At step 206, the method 200 includes emulating, by the custodian nodes, execution of the given smart contract to determine identities of possible recipient nodes therefor. The possible recipient nodes are the nodes that are supposed to or should be assigned to have access to data shared as a result of execution of the given smart contract, if the blockchain network 102 is operating as expected.

In an embodiment, the emulation of the execution of the given smart contract is performed at the said at least one of the application nodes as part of the custodian nodes. The custodian nodes 302 that include at least one application node 304 emulates the execution of the given smart contract to determine the identities of the possible recipient nodes. The emulation of the execution of the given smart contract at the said at least one of the application nodes 304 ensures transparency in the decentralized auditing of the blockchain network 102. In some implementations, the emulation of the smart contract is executed before the actual execution (deployment) of the smart contract in the blockchain network 102. In some implementations, the emulation of the smart contract is executed in real-time or near real-time to determine the identities of the possible recipient nodes. Referring to FIG 4, as depicted, for example, the emulation of the execution of the given smart contract is performed at the application node 102b.

It may be understood that a data output in the blockchain network 102 after execution of a smart contract may be categorized into a global data set and a private data set. In the global data set, the transaction data is available to all the nodes of the blockchain network 102. In the private data set, the transaction data is available to selected nodes in the blockchain network that are defined in the given smart contract. For the global data set, the custodian nodes 302 are configured to compare the status of the blockchain network 102 before and after the execution of the smart contract to identify and verify the changes in the blockchain network 102. For the private data set, the custodian nodes 302 are configured to observe the network configuration and rules between the application nodes 304, as the custodian nodes 302 do not have the access to the private storage of the application nodes 304. Further, as the gatekeeper node resides within the application nodes 304, the custodian nodes 302 may verify that the deployed smart contract is secure and correctly programmed. Thus, the custodian nodes 302 simulate (or emulate) a similar network based on the configuration file and execute the transactions on the said simulation to observe (or monitor) the changes caused by the transaction. The obtained private data set is a behaviour-based replica of the application nodes 304. Furthermore, in the emulated blockchain network 102, the custodian nodes 302 verify the rules specified in the configuration file by attempting to access the data that should not be accessible. In such a manner, the custodian nodes 302 emulate and verify all the transactions executed at the application nodes 304 as specified in the configuration file.

At step 208, the method 200 includes monitoring, by the custodian nodes, execution of the given smart contract in the blockchain network 102 to access information about identities of the recipient nodes therein. In the present implementation, once the smart contract has been executed, the custodian nodes 302 monitor a status of the blockchain network 102 before and after the execution of the smart contract to observe the changes in the state of the blockchain network 102. In particular, the custodian nodes 302 monitors, in effect, to which all nodes the output data from the execution of the given smart contract is being shared with in the blockchain network 102. This is possible as the custodian nodes 302 are given access at least to monitor transmission of said output data, at least with respect to the execution of the given smart contract.

At step 210, the method includes generating, by the custodian nodes, a notification indicative of potential breach of at least one of the one or more parameters for executing the given smart contract in the blockchain network 102, if there is a mismatch between the determined identities of possible recipient nodes and the identities of the recipient nodes from the accessed information thereabout. That is, based on the monitoring of the execution of the given smart contract in the blockchain network 102, if any anomaly is detected in the blockchain network 102 behaviour, the custodian nodes trigger (or generate) the notification to the respective application nodes. In particular, the potential breach is identified, and thereby the notification is generated by the custodian nodes 302, in case there is a mismatch between the determined identities of possible recipient nodes and the identities of the recipient nodes 306.

In accordance with an embodiment, the generated notification is notified, by the custodian nodes 302, to at least one of the determined possible recipient nodes. As the recipient nodes 306 are the subset of the application nodes 304 that assigned to have access to data shared as the result of execution of the given smart contract, the generated notification is notified to the possible recipient nodes. The generated notifications may include information specific to node behaviour and boundaries at which promises are being unfulfilled or wrongly defined. This is possible since the verification is performed in a decentralized manner, and the application nodes 304 may access the emulation to verify and observe the exact action or a place where the rules are being broken. Referring to FIG 4, as depicted, for example, one or more nodes of the custodian nodes 302 notify the generated notification to the determined possible recipient nodes. In the illustrated example, the application node 102b of the custodian nodes 302 notifies a generated notification 404 to the possible recipient node 102d.

It may be appreciated that the steps 202 to 210 are only illustrative, and other alternatives can also be provided where one or more steps are added, one or more steps are removed, or one or more steps are provided in a different sequence without departing from the scope of the present disclosure.

In accordance with an embodiment, the method 200 further comprises randomly or pseudo-randomly selecting one or more smart contracts of a plurality of smart contracts being executed in the blockchain network 102 to determine corresponding potential breach of at least one of the one or more parameters thereof, in the blockchain network 102. In an exemplary scenario, the emulation of the smart contract is executed in real-time or near real-time to determine the identities of the possible recipient nodes. In such a case, the custodian nodes 302 may randomly select an executed smart contract for the decentralized auditing. Advantageously, such random selection of the executed smart contract reduces processing time and memory requirement, as all the smart contract executions are not checked for the potential breach. By utilizing the random smart contract executions, the potential breach in the blockchain network may still be identified.

The system 100 and the method 200 of the present disclosure enables monitoring of the compliance and confidentiality promises proposed and claimed by the smart contract-based applications in a decentralized manner. The system 100 and the method 200 further enables automation of the process of verification of confidentiality and compliance processes, whereas in the conventional decentralized systems, the process of verification is usually manual. A further advantage of the system 100 and the method 200 of the present disclosure is that the monitoring and verification are run in near real-time and since it is emulation based, it can even be run before the application is deployed. However, in the conventional systems, such near real-time verification is unknown. Moreover, in design phase of the blockchain network 102, it can be used to verify and create a secure and a confidential smart contract. In the system 100 and the method 200 of the present disclosure, since the monitoring do not need access to the actual private data set, even while running in the real-time, it protects the privacy of the blockchain network 102 and verifies the promises without any confidentiality breach.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| system | 100 |
| nodes | 102a, 102b, ..., 102n |
| blockchain network | 102 |
| computing device | 04 |
| network | 106 |
| ledger | 108 |
| method | 200 |
| step | 202 |
| step | 204 |
| step | 206 |
| step | 208 |
| step | 210 |
| custodian nodes | 302 |
| application nodes | 304 |
| recipient nodes | 306 |

## Claims

1. A method (200) for decentralized auditing of a blockchain network (102), the method (200) comprising:
designating a set of first nodes (102a-102g) in the blockchain network (102) as custodian nodes (302), with the custodian nodes (302) having access to information about identities of nodes among which data is shared as a result of execution of a smart contract in the blockchain network (102);
receiving, by the custodian nodes (302), a configuration file (402) comprising one or more parameters for executing a given smart contract in the blockchain network (102), the configuration file (402) defining information about a set of second nodes (102b-102d), designated as application nodes (304), assigned to execute the given smart contract, and a set of third nodes (102c-102d), designated as recipient nodes (306) and being a subset of the application nodes (304), assigned to have access to data shared as a result of execution of the given smart contract;
emulating, by the custodian nodes (302), execution of the given smart contract to determine identities of possible recipient nodes (306) therefor;
monitoring, by the custodian nodes (302), execution of the given smart contract in the blockchain network (102) to access information about identities of the recipient nodes (306) therein; and
generating, by the custodian nodes (302), a notification indicative of potential breach of at least one of the one or more parameters for executing the given smart contract in the blockchain network (102), if there is a mismatch between the determined identities of possible recipient nodes (306) and the identities of the recipient nodes (306) from the accessed information thereabout.

2. The method (200) according to claim 1, wherein at least one of the application nodes (102b) is part of the custodian nodes (302) in the blockchain network (102), at least for the decentralized auditing of the blockchain network (102) during execution of the given smart contract assigned to be executed thereby.

3. The method (200) according to claim 2, wherein the configuration file (402) for the given smart contract is received by the custodian nodes (302) from the said at least one of the application nodes (102b) as part of the custodian nodes (302).

4. The method (200) according to claim 2 or 3, wherein emulation of the execution of the given smart contract is performed at the said at least one of the application nodes (102b) as part of the custodian nodes (302).

5. The method (200) according to any one of claims 1 - 4, wherein the generated notification (404) is notified, by the custodian nodes (302), to at least one of the determined possible recipient nodes (304).

6. The method (200) according to any one of claims 1 - 5, wherein the custodian nodes (302) are selected from a set of trusted nodes in the blockchain network (102).

7. The method (200) according to any one of claims 1 - 6, further comprising randomly or pseudo-randomly selecting one or more smart contracts of a plurality of smart contracts being executed in the blockchain network (102) to determine corresponding potential breach of at least one of the one or more parameters thereof, in the blockchain network (102).

8. A system (100) for decentralized auditing of a blockchain network (102), the system (100) comprising:
one or more processing units; and
a memory communicatively coupled to the one or more processing units, the memory comprising a module stored in the form of machine-readable instructions executable by the one or more processing units, wherein the module is configured to perform the method steps as claimed in claims 1 to 7.

9. A computer-program product, having computer-readable instructions stored therein, that when executed by a processor, cause the processor to perform method steps according to any of the claims 1 to 7.

10. A computer readable medium on which program code sections of a computer program are saved, the program code sections being loadable into and/or executable in a system to make the system (100) to execute the method steps according to any of the claims 1 to 7 when the program code sections are executed in the system.
